Europäisches Patentamt

European Patent Office

Office européen des brevets

(19)

(11) Veröffentlichungsnummer: **0 239 155**
**B1**

(12) **EUROPÄISCHE PATENTSCHRIFT**

(45) Veröffentlichungstag der Patentschrift: **19.09.90**

(51) Int. Cl.⁵: **G 06 F 15/16,** G 06 F 13/42

(21) Anmeldenummer: **87200431.2**

(22) Anmeldetag: **18.02.87**

(54) **Verfahren zum Datenaustausch zwischen einem ersten und einem zweiten Prozessor.**

(30) Priorität: **20.02.86 DE 3605421**

(43) Veröffentlichungstag der Anmeldung:
**30.09.87 Patentblatt 87/40**

(45) Bekanntmachung des Hinweises auf die
Patenterteilung:
**19.09.90 Patentblatt 90/38**

(84) Benannte Vertragsstaaten:
**ES**

(56) Entgegenhaltungen:
**DE-A-3 222 660**
**FR-A-2 254 064**
**FR-A-2 503 419**
**US-A-4 301 507**

**MINI/MICRO CONFERENCE RECORD, Mai 1984,
Seiten 1-6, New York, US; D.C. STANLEY:
"Versatile serial protocol for a microcomputer -
peripheral interface"**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **Füldner, Friedrich
Wilstorfstrasse 19
D-7730 Villingen-Schwenningen (DE)**
Erfinder: **Rohde, Wilfried
Fohrenweg 17
D-7731 Unterkirnach (DE)**

## Beschreibung

Die Erfindung betrifft ein Verfahren zum Datenaustausch zwischen einem ersten und einem zweiten Prozessor, die über drei Leitungen miteinander verbunden sind.

In der DE-OS 34 04 721 ist ein Verfahren zur Datenübertragung mit einem bidirektionalen Datenbus beschrieben. Der bidirektionale Datenbus, der eine Steuereinheit und mehrere einzeln adressierbare Peripheriebausteine miteinander verbindet, ist aus einer Taktleitung, einer Freigabeleitung und einer Datenleitung aufgebaut. Damit die einzelnen Peripheriebausteine, die von der Steuereinheit abgegebenen Befehle ausführen, ist ein ständiger Datenfluß zwischen den Peripheriebausteinen und der Steuereinheit nötig. Weil die Steuereinheit Rückmeldung von den einzelnen Peripheriebausteinen, die durch unterschiedliche Wortlängen adressiert werden, verlangt, arbeitet der Datenbus bidirektional. In jedem Peripheriebaustein ist eine Schaltung vorgesehen, die den Datenfluß über den Datenbus zur Steuereinheit verursacht, wenn ein Peripheriebaustein von der Steuereinheit adressiert wurde.

Nicht alle Anwendungsfälle sehen einen Datenaustausch zwischen einer Steuereinheit, z.B. einem Mikroprozessor und mehreren Peripheriebausteinen vor. So ist z.B. bei der Bedieneinheit, die mit einem Mikroprozessor ausgestattet ist, und dem Servoprozessor eines CD-Plattenspielers nur ein Dialog zwischen zwei Prozessoren nötig. Der Mikroprozessor der Bedieneinheit, der als Masterprozessor arbeitet, gibt Befehle an den Servoprozessor, der den Plattenantrieb, den Antrieb für das Spursuchen und Spurverfolgen des Abtasters und den Antrieb für die Schublade steuert. Der Servoprozessor gibt Rückmeldungen an den Masterprozessor.

Für einen derartigen Anwendungsfall genügt ein einfacheres Verfahren zur bidirektionalen Datenübertragung.

Es ist daher Aufgabe der Erfindung, ein einfaches Verfahren zum Datenaustausch zwischen zwei Prozessoren anzugeben, das einen geregelten und sicheren Datenfluß ermöglicht.

Die Erfindung löst diese Aufgabe durch die im Anspruch 1 angeführten Merkmale.

An Hand eines Ausführungsbeispieles wird das erfindungsgemäße Verfahren erläutert.

Ein Masterprozessor, bei dem es sich z.B. um den Mikroprozessor in der Bedieneinheit eines CD-Plattenspielers handeln kann, ist durch eine Taktleitung, eine Datenleitung und eine Masseleitung mit dem Servoprozessor des CD-Plattenspielers verbunden. Wie bereits erwähnt, erfolgt im Betrieb des CD-Plattenspielers ein Datenaustausch zwischen dem Masterprozessor der Bedieneinheit und dem Servoprozessor, der die Antriebe für die Platte, für das Spursuchen und und Spurverfolgen des optischen Abtasters sowie für die Schublade steuert.

Solange der Masterprozessor und der Servoprozessor keine Daten austauschen, liegen die prozessor keine Daten austauschen, liegen die Pegel auf der Daten- und der Taktleitung auf "High". In diesem Zustand sind beide Prozessoren in Empfangsbereitschaft.

Es wird zunächst der Fall betrachtet, daß der Masterprozessor Daten zum Servoprozessor sendet.

Den Beginn der Aussendung von Daten zeigt der Masterprozessor dadurch an, daß er den Pegel der Taktleitung auf "Low" setzt. Der Servoprozessor setzt, nachdem er den vom Masterprozessor verursachten Wechsel des Pegels auf der Taktleitung von "High" nach "Low" erkannt hat, den Pegel der Datenleitung ebenfalls auf "Low". Diesen vom Servoprozessor bewirkten Wechsel des Pegels auf der Datenleitung von "High" nach "Low" interpretiert der Masterprozessor als Quittung des Servoprozessors und setzt darauf den pegel der Taktleitung wieder auf "High". Der vom Masterprozessor verursachte Wechsel des Pegels auf der Taktleitung von "Low" nach "High" bewirkt, daß der Servoprozessor den Pegel der Datenleitung wieder auf "High" setzt. Diesen vom Servoprozessor verursachten Wechsel des Pegels auf der Datenleitung von "Low" nach "High" interpretiert der Masterprozessor als Aufforderung des Servoprozessors, mit der Aussendung der Daten zum Servoprozessor zu beginnen.

Es wird nun erklärt, wie die Aussendung von Daten vom Servoprozessor zum Masterprozessor erfolgt.

Bevor der Servoprozessor die Aussendung von Daten zum Masterprozessor durch Setzen des Pegels der Datenleitung auf "Low" anzeigt, fragt er den Pegel der Taktleitung ein erstes Mal ab. Liegt der Pegel der Taktleitung bei der ersten Abfrage auf "Low", so geht der Servoprozessor in Empfangsbereitschaft zurück. Liegt dagegen der Pegel der Taktleitung bei der ersten Abfrage auf "High", so sezt der Servoprozessor den Pegel der Datenleitung auf "Low". Der Masterprozessor setzt eine vorgebbare Zeit t nach dem Wechsel des Pegels auf der Datenleitung von "High" nach "Low" den Pegel der Taktleitung ebenfalls auf "Low". Der Servoprozessor fragt den Pegel der Taktleitung während der Zeit t ein zweites Mal ab. Liegt der Pegel der Taktleitung bei der zweiten Abfrage auf "Low", so geht der Servoprozessor in Empfangsbereitschaft zurück, weil er in diesem Fall annimmt, daß der Masterprozessor Daten senden will. Liegt der Pegel der Taktleitung bei der zweiten Abfrage dagegen auf "High", bleibt der Servoprozessor in Sendebereitschaft. Den vom Masterprozessor nach der vorgebbaren Zeit t verursachten Wechsel des pegels auf der Taktleitung von "High" nach "Low" interpretiert der Servoprozessor als Quittung des Masterprozessors und setzt darauf den Pegel der Datenleitung wieder auf "High". Der Masterprozessor setzt, nachdem er den vom Servoprozessor bewirkten Wechsel des Pegels auf der Datenleitung von "Low" nach "High" erkannt hat, den Pegel der Taktleitung wieder auf "High". Diesen vom Masterprozessor verursachten Wechsel des Pegels auf der Taktleitung von "Low" nach "High" interpretiert der Servoprozessor als Aufforderung des Masterprozessors, mit der Aussendung von Daten zu beginnen.

Der Fall, daß durch gleichzeitiges Senden beider Prozessoren der Datenfluß gestört wird, ist bei der Erfindung aus folgenden Gründen ausgeschlossen. Wie bereits erwähnt, fragt der Servoprozessor zunächst den Pegel der Taktleitung ab, bevor er die Aussendung von Daten durch Setzen des Pegels der Datenleitung auf "Low" anzeigt. Liegt der Pegel der Taktleitung auf "Low", weil der Masterprozessor z.B. senden will, so geht der Servoprozessor in Empfangsbereitschaft zurück. Liegt der Pegel der Taktleitung bei der ersten Abfrage dagegen auf "High", so setzt der Servoprozessor den Pegel der Datenleitung auf "Low". Der Masterprozessor setzt eine vorgebbare Zeit t, z.B. 20 µs, nachdem der Servoprozessor den Pegel der Datenleitung auf "Low" gesetzt hat, den Pegel der Taktleitung ebenfalls auf "Low", wenn er in Empfangsbereitschaft ist. Innerhalb des Zeitintervalls t fragt der Servoprozessor ein zweites Mal den Pegel der Taktleitung ab. Nur wenn der Pegel der Taktleitung auch bei der zweiten Abfrage auf "High" liegt, bleibt der Servoprozessor in Sendebereitschaft. Andernfalls geht er in Empfangsbereitschaft zurück und setzt den Pegel der Datenleitung wieder auf "High", weil er den Pegel "Low" bei der zweiten Abfrage der Taktleitung als Sendewunsch des Masterprozessors interpretiert.

Das Ende einer jeden Datensendung erkennen der Masterprozessor und der Servoprozessor jeweils am ersten Byte einer jeden Datensendung, weil dessen Informationsgehalt angibt, wieviele Takte die Datensendung dauert. Der Takt kann entweder vom Masterprozessor oder vom Servoprozessor erzeugt werden. Besonders vorteilhaft ist es, den Takt vom zeitkritischen Prozessor erzeugen zu lassen. Wenn z.B. eine Datensendung 100 Takte lang dauert, so weiß der jeweilige Empfänger, der Masterprozessor oder der Servoprozessor, daß nach 100 Takten die Datensendung beendet ist. Bei diesem Zahlenbeispiel werden deshalb nach 100 Takten die Pegel der Taktleitung und der Datenleitung auf "High" gesetzt. Beide Prozessoren gehen in Empfangsbereitschaft über.

Die Signalisierung, die den Datenaustausch zwischen den beiden Prozessoren einleitet, erfolgt bei dem beschriebenen Ausführungsbeispiel auf besonders einfache Weise, weil das erste Anzeigesignal, das zweite und das dritte Antwortsignal durch den Pegel "High" dargestellt werden, während das zweite Anzeigesignal und das erste Antwortsignal durch den Pegel "Low" dargestellt werden.

**Patentansprüche**

1. Verfahren zum Datenaustausch zwischen einem ersten und zweiten Prozessor, die über drei Leitungen miteinander verbunden sind, folgenden Merkmalen:
   a) wenn keine Daten ausgetauscht werden, zeigt jeder Prozessor auf einer ihm zugeordneten Leitung seine Empfangsbereitschaft durch ein erstes Anzeigesignal an;
   b) der jeweils sendebereite Prozessor zeigt die Aussendung von Daten durch ein zweites Anzeigesignal auf der ihm zugeordneten Leitung an;
   c) der jeweils empfangsbereite Prozessor beantwortet das zweite Anzeigesignal des jeweils sendebereiten Prozessors mit einem ersten Antwortsignal auf der ihm zugeordneten Leitung;
   d) der jeweils sendebereite Prozessor beantwortet das erste Antwortsignal des jeweils empfangsbereiten Prozessors mit einem zweiten Antwortsignal auf der ihm zugeordneten Leitung;
   e) der jeweils empfangsbereite Prozessor beantwortet das zweite Antwortsignal des jeweils sendebereiten Prozessors mit einem dritten Antwortsignal auf der ihm zugeordneten Leitung;
   f) der jeweils sendebereite Prozessor interpretiert das dritte Antwortsignal des jeweils empfangsbereiten Prozessors als Aufforderung, mit der Aussendung von Daten zu beginnen;
   wobei nur für die Senderichtung von ersten zum zweiten Prozessor gilt:
   g) der erste Prozessor fragt, bevor er die Aussendung von Daten anzeigt, die dem zweiten Prozessor zugeordnete Leitung ein erstes Mal auf das zweite Anzeigesignal ab;
   h) liegt das zweite Anzeigesignal bei der ersten Abfrage auf der dem zweiten Prozessor zugeordneten Leitung, so geht der erste Prozessor in Empfangsbereitschaft zurück;
   i) der zweite Prozessor beantwortet das zweite Anzeigesignal eine vorgebbare Zeit t nach seinem Empfang mit dem ersten Antwortsignal auf der ihm zugeordneten Leitung;
   j) der erste Prozessor fragt während der Zeit t nach Aussendung des zweiten Anzeigesignals die dem zweiten Prozessor zugeordnete Leitung ein zweites Mal ab;
   k) liegt bei der zweiten Abfrage das zweite Anzeigesignal auf der dem zweiten Prozessor zugeordneten Leitung, so geht der erste Prozessor in Empfangsbereitschaft zurück; und wobei für beide senderichtungen gilt:
   l) der Informationsgehalt des ersten Bytes einer jeden Datensendung gibt an, wie lange die Datensendung dauert;
   m) am Ende einer jeden Datensendung gehen beide Prozessoren in Empfangsbereitschaft.

2. Verfahren nach Anspruch 1, gekennzeichnet durch folgendes Merkmal:
   n) das erste Anzeigesignal, das zweite Antwortsignal und das dritte Antwortsignal werden durch einen ersten Pegel realisiert, während das zweite Anzeigesignal und das erste Antwortsignal durch einen zweiten Pegel realisiert werden.

3. Verfahren nach Anspruch 2, gekennzeichnet durch folgendes Merkmal:
   o) der erste Pegel entspricht dem Wert "High", der zweite Pegel dem Wert "Low".

4. Verfahren nach Anspruch 1, 2 oder 3, gekennzeichnet durch folgendes Merkmal:
   p) eine Leitung dient als Datenleitung, eine als Taktleitung und eine als Masseleitung.

5. Verfahren nach Anspruch 4, gekennzeichnet durch folgendes Merkmal:
   q) der erste Prozessor erzeugt den Takt.

6. Verfahren nach Anspruch 4, gekennzeichnet durch folgendes Merkmal:

r) der zweite Prozessor erzeugt den Takt.

## Revendications

1. Procédé d'échange de données entre un premier et un deuxième processeur, interconnectés par trois lignes, caractérisé par les caractéristiques suivantes:

a) lorsqu'il n'y a pas d'échange de données, chaque processeur signale par un premier signal indicateur sur la ligne qui lui est attribuée qu'il est prêt à recevoir

b) le processeur qui est dans chaque cas prêt à émettre signale l'émission de données par un deuxième signal indicateur sur la ligne qui lui est attribuée

c) le processeur qui est dans chaque cas prêt à recevoir répond au deuxième signal indicateur du processeur étant prêt à émettre par un premier signal de réponse sur la ligne qui lui est attribuée

d) le processeur qui est dans chaque cas prêt à émettre répond au premier signal de réponse du processeur étant prêt à recevoir par un deuxième signal de réponse sur la ligne qui lui est attribuée

e) le processeur qui est dans chaque cas prêt à recevoir répond au deuxième signal de réponse du processeur étant prêt à émettre par un troisième signal de réponse sur la ligne qui lui est attribuée

f) le processeur qui est dans chaque cas prêt à émettre interprète le troisième signal de réponse du processeur étant prêt à recevoir comme demande de lancement de l'émission des données

g) avant de signaler l'émission des données, le premier processeur s'informe une première fois du deuxième signal indicateur sur la ligne attribuée au deuxième processeur

h) si le deuxième signal indicateur est présent sur la ligne attribuée au deuxième processeur lors de la première interrogation, le premier processeur retourne à l'état d'écoute

i) le deuxième processeur répond au deuxième signal indicateur, au bout d'un temps t prédéfini après sa réception, par un premier signal de réponse sur la ligne qui lui est attribuée

j) pendant le temps t après l'émission du deuxième signal indicateur, le premier processeur interroge la ligne attribuée au deuxième processeur une deuxième fois

k) si, lors de la deuxième interrogation, le deuxième signal indicateur est présent sur la ligne attribuée au deuxième processeur, le premier processeur retourne à l'état d'écoute

l) l'information contenue dans le premier octet de chaque émission de données indique la durée de l'émission des données

m) à la fin de chaque émission de données, les deux processeurs passent à l'état d'écoute.

2. Procédé selon la revendication 1, caractérisé par la caractéristique suivante:

n) le premier signal indicateur, le deuxième signal de réponse et le troisième signal de réponse sont réalisés par un premier niveau, tandis que le deuxième signal indicateur et le premier signal de réponse sont réalisés par un deuxième niveau.

3. Procédé selon la revendication 2, caractérisé par la caractéristique suivante:

o) le premier niveau correspond à la valeur "haut", le deuxième niveau à la valeur "bas".

4. Procédé selon la revendication 1, 2 ou 3, caractérisé par la caractéristique suivante:

p) une ligne sert de ligne d'acheminement des données, une de ligne de signal d'horloge et une de ligne de terre.

5. Procédé selon la revendication 4, caractérisé par la caractéristique suivante:

q) le premier processeur génère le signal d'horloge.

6. Procédé selon la revendication 4, caractérisé par la caractéristique suivante:

r) le deuxième processeur génère le signal d'horloge.

## Claims

1. A method of data exchange between a first and a second processor, which are connected together by means of three lines, characterised by the following features:

a) when no data is exchanged, each processor announces on a line allocated to it its readiness to receive by means of a first announcement signal

b) the respective processor which is ready to send announces the transmission of data by means of a second announcement signal on the line allocated to it

c) the respective processor which is ready to receive answers the second announcement signal of the respective processor which is ready to send, with a first reply signal on the line allocated to it

d) the respective processor which is ready to send answers the first reply signal of the respective processor which is ready to receive with a second reply signal on the line allocated to it

e) the respective processor which is ready to receive answers the second reply signal of the respective processor which is ready to send, with a third reply signal on the line allocated to it

f) the respective processor which is ready to send interprets the third reply signal of the processor which is ready to receive as a request to begin sending out data

g) the first processor calls up the line allocated to the second processor a first time asking for the second announcement signal, before it announces the transmission of data,

h) if the second announcement signal is on the line allocated to the second processor at the first call up, then the first processor goes back into the ready to receive mode

i) the second processor answers the second announcement signal a predetermined time t after it is received with the first reply signal on the line allocated to it

j) during the time t after sending out the second announcement signal the first processor calls up the line allocated to the second processor a second time

k) if on the second call up the second announcement signal is on the line allocated to the second processor, then the first processor goes back into ready to receive mode

l) the information content of the first byte of each data transmission indicates how long the data transmission lasts

m) at the end of each data transmission both processors go into ready to receive mode.

2. A method according to claim 1, characterised by the following feature:

n) the first announcement signal, the second reply signal and the third reply signal are implemented by a first level, whereas the second announcement signal and the first reply signal are implemented by a second level.

3. A method according to claim 2, characterised by the following feature:

o) the first level corresponds to the "High" value, the second level to the "Low" value.

4. A method according to claim 1, 2 or 3 characterised by the following feature:

p) one line serves as the data line, one as the timing line and one as the earth line.

5. A method according to claim 4, characterised by the following feature:

q) the first processor produces the timing.

6. A method according to claim 4, characterised by the following feature:

r) the second processor produces the timing.